# EUROPEAN PATENT APPLICATION

(11) **EP 2 814 102 A1**
(43) Date of publication of application: **17.12.2014**
(21) Application number: 13191011.9
(22) Date of filing: 31.10.2013
(51) Int. Cl.: H01M 10/04, H01M 10/42, H01M 2/22, H01M 2/10, H01M 10/613, H01M 10/647, H01M 2/02

(54) **Rechargeable battery pack**

(30) Priority: 14.06.2013 KR 20130068374
(71) Applicant: Samsung SDI Co., Ltd., Yongin-si, Gyeonggi-do (KR)
(72) Inventor: YI, Sang-Il, Gyeonggi-do (KR)
(74) Representative: Taor, Simon Edward William

(57) **Abstract**

A rechargeable battery pack (100) including a bare cell (20) comprising a terrace (22) having a first surface (221) and a second surface (222) protruding from the first surface, an electrode tab (23, 24) electrically coupled to the bare cell, the electrode tab protruding from the first surface of the terrace (22), and extending along the second surface, and a protective circuit module (30) comprising a connection tab (32, 33) bent toward the first surface and coupled to the electrode tab, and said protective circuit board coupled to the connection tab is proposed.

## Description

The described technology relates generally to a rechargeable battery pack.

A rechargeable battery is a battery that is designed to be repeatedly charged and discharged, unlike a primary battery. Low-capacity rechargeable batteries may be used for portable compact electronic apparatuses, for example, mobile phones, notebook computers, and/or camcorders. High-capacity rechargeable batteries may be used as power sources for, for example, driving a motor of an electric bike, a scooter, an electric vehicle, a fork lift, and the like.

A rechargeable battery pack includes a bare cell and a protective circuit module (PCM) for protecting the bare cell. The protective circuit module includes a circuit board forming a protection circuit for protecting the bare cell against an overcharge, an over-discharge, an overcurrent, and an electrical short, and protection elements mounted on the circuit board.

In an example of a rechargeable battery pack, a pouch-type bare cell is configured as a tablet type cell, a terrace is formed on a side of the bare cell, an electrode tab electrically coupled to (e.g., electrically coupled to) an electrode assembly of the bare cell is protruded from the terrace, and the electrode tab is combined with the protective circuit module through welding.

However, when the protective circuit module is combined with the electrode tab through welding, the electrode tab is welded to a protective circuit board of the protective circuit module so a mounting area for installing protection elements on the protective circuit module is reduced and a process for installing the protective circuit module in the bare cell becomes complicated.

Further, to protect a mounting area for installing protection elements in a protective circuit module when an electrode tab is welded on the protective circuit board of the protective circuit module, an additional configuration that is combined to the electrode tab through welding and connects the electrode tab and the protective circuit module must be used.

However, when the additional configuration is used, the number of components of the rechargeable battery pack is increased, the process for installing the protective circuit module in the bare cell becomes complicated, and the production cost of the rechargeable battery pack is increased.

The above information disclosed in this Background section is only for enhancement of understanding of the background of the described technology and therefore it may contain information that does not form the prior art that is already known to a person of ordinary skill in the art.

Aspects of embodiments according to the present invention are directed to a rechargeable battery pack including a protective circuit module for reserving (or acquiring) an area (e.g., a sufficient area) for mounting protection elements and having a connection configuration coupled to a bare cell through a simple installation process.

According to an aspect of an embodiment according to the present invention, there is provided a rechargeable battery pack including: a bare cell including a terrace having a first surface and a second surface protruding from the first surface; an electrode tab electrically coupled to the bare cell, the electrode tab protruding from the first surface of the terrace, and extending along the second surface; and a protective circuit module including a connection tab bent toward the first surface and coupled to the electrode tab, and a protective circuit board coupled to the connection tab.

The connection tab may include a connector coupled to an edge of the protective circuit board, a combination unit coupled to the electrode tab and bent from the connector, and a bent unit for coupling the connector and the combination unit.

The connector may be bent and may be stacked on the combination unit so that the bent unit faces the first surface, and the combination unit is stacked on the electrode tab and is coupled to the electrode tab.

The combination unit may include a first combination unit bent from the connector, a second combination unit bent from the first combination unit, and a third combination unit bent from the second combination unit.

The bent unit may include: a first bent unit for coupling the connector and the first combination unit; a second bent unit for coupling the first combination unit and the second combination unit; and a third bent unit for coupling the second combination unit and the third combination unit.

The connector may be bent and may be stacked on the first combination unit so that the first bent unit faces the first surface, the first combination unit is bent and is stacked on the second combination unit so that the second bent unit faces away from the first surface, the second combination unit is bent and is stacked on the third combination unit so that the third bent unit faces the first surface, and the third combination unit is stacked on the electrode tab and is coupled to the electrode tab.

The rechargeable battery pack may further include a case configured to receive the bare cell.

The case may include a fixed protrusion to which the protective circuit module is coupled.

The case may further include a heat radiation groove formed at a bottom side of the case.

The bare cell may include a plurality of bare cells, and the connection tab includes a plurality of connection tabs coupled to electrode tabs of the plurality of bare cells.

According to an aspect of the present invention, there is provided a rechargeable battery pack as set out in claim 1. Preferred features of this aspect are set out in claims 2 to 14.

According to an aspect of an embodiment according to the present invention, the rechargeable battery pack in which the area for mounting the protection element, when the protective circuit module is coupled to the bare cell, is not reduced because the connection tab is coupled to the edge of the protective circuit board; in addition, a mechanism for bending the connection tab in the direction of the bare cell to be coupled to the electrode tab is provided.
FIG. 1 shows a perspective view of a rechargeable battery pack, according to a first example embodiment of the present invention.
FIG. 2 shows an exploded perspective view of a rechargeable battery pack shown in

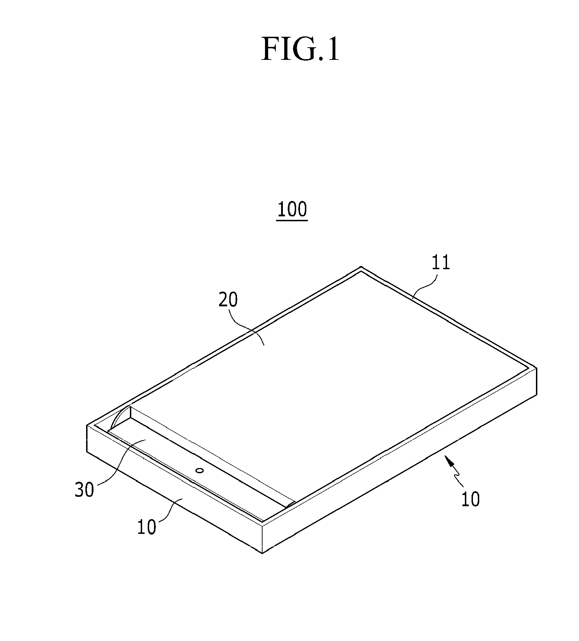

FIG. 1, according to an example embodiment of the present invention.

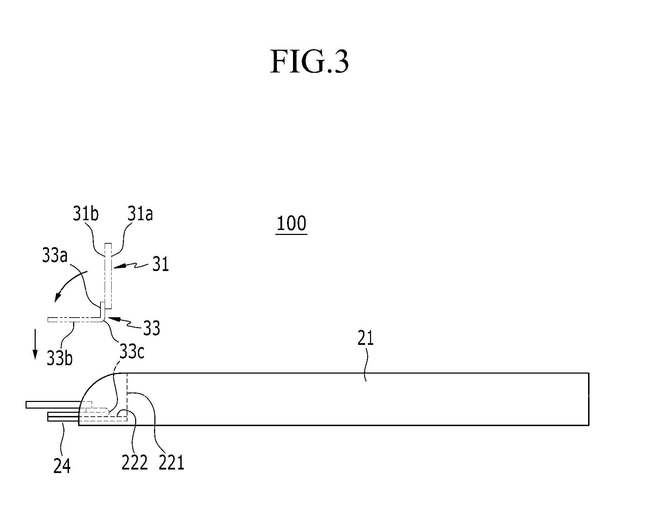

FIG. 3 shows a side view of a state in which a protective circuit module of a rechargeable battery pack shown in FIG. 1 is coupled to a bare cell, according to an example embodiment of the present invention.

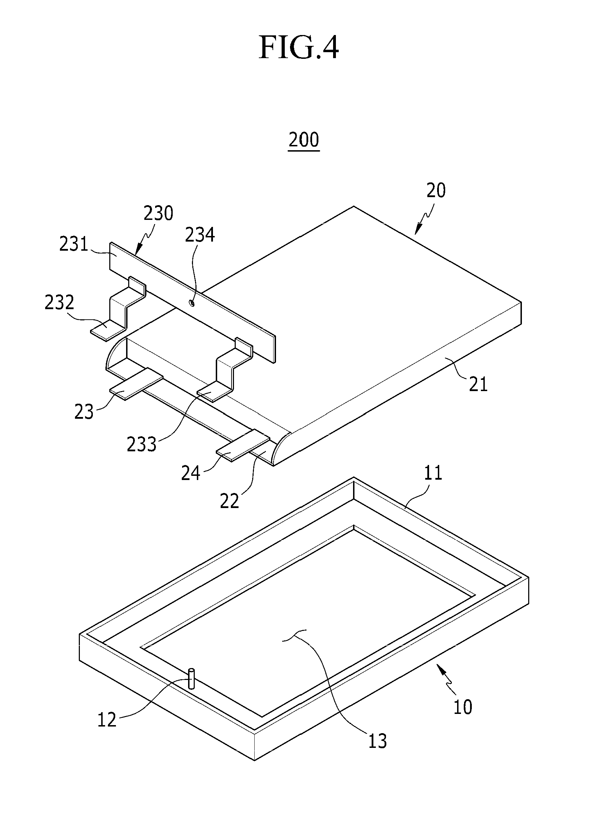

FIG. 4 shows an exploded perspective view of a rechargeable battery pack, according to a second example embodiment of the present invention.

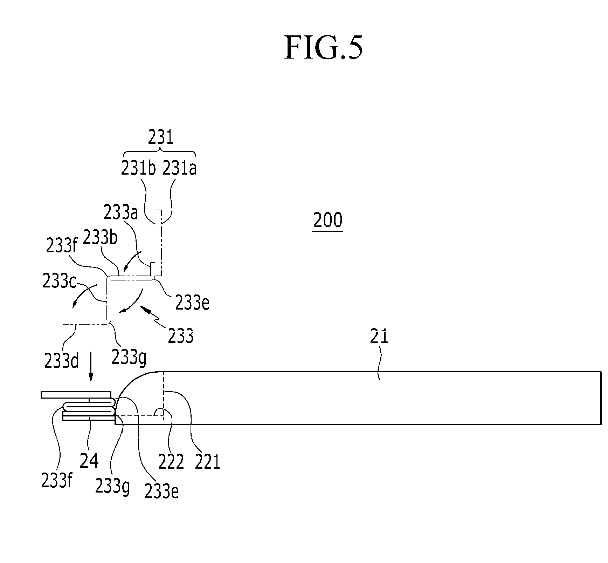

FIG. 5 shows a side view of a state in which a protective circuit module of a rechargeable battery pack shown in FIG. 4 is coupled to a bare cell, according to an example embodiment of the present invention.

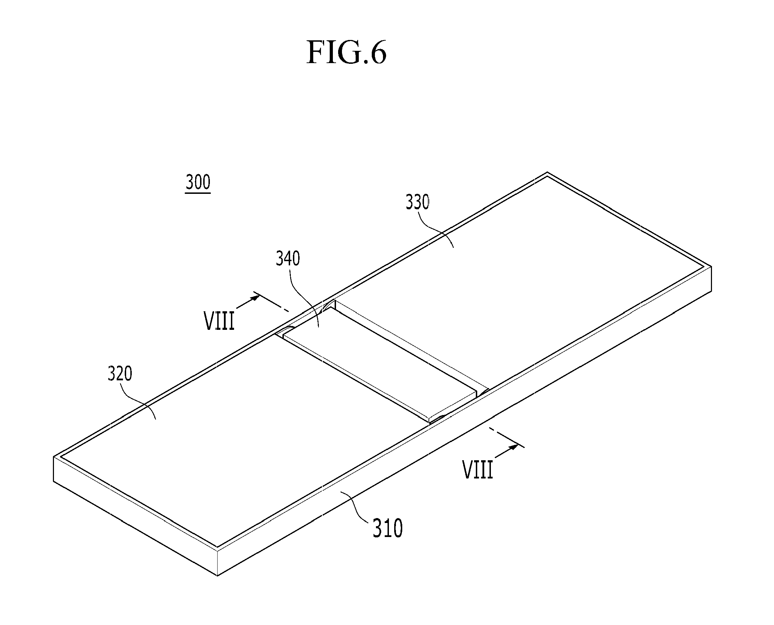

FIG. 6 shows a perspective view of a rechargeable battery pack, according to a third example embodiment of the present invention.

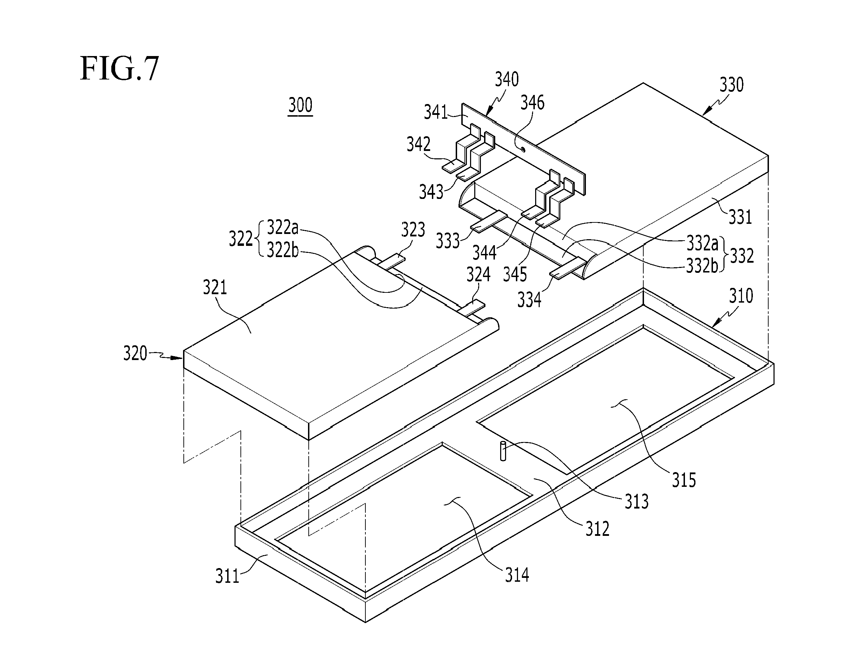

FIG. 7 shows an exploded perspective view of a rechargeable battery pack shown in
FIG. 6, according to an example embodiment of the present invention.

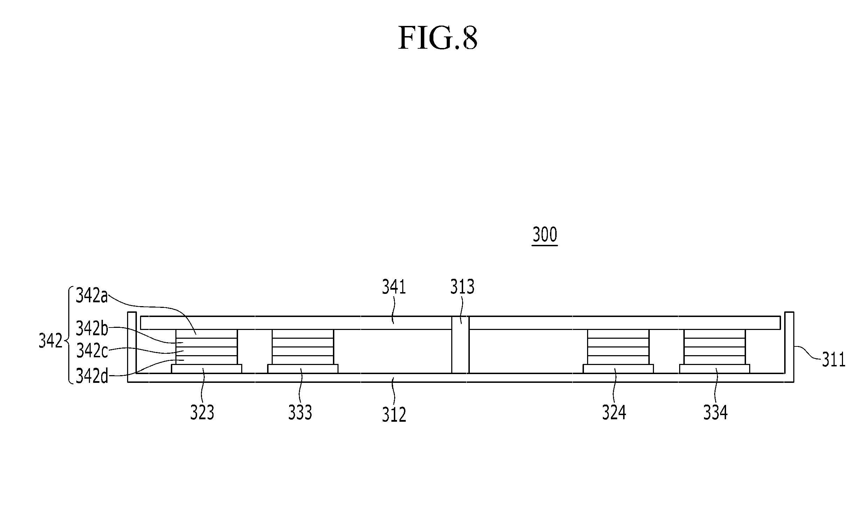

FIG. 8 shows a cross-sectional view with respect to a line VIII-VIII shown in FIG. 6, according to an example embodiment of the present invention.

The present invention will be described more fully hereinafter with reference to the accompanying drawings, in which example embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

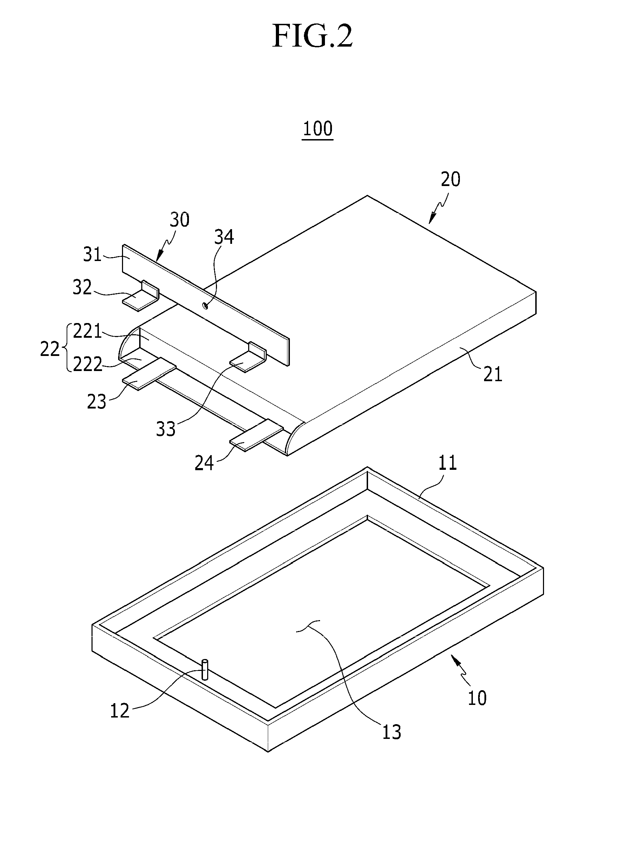

FIG. 1 shows a perspective view of a rechargeable battery pack according to a first example embodiment of the present invention, and FIG. 2 shows an exploded perspective view of a rechargeable battery pack shown in FIG. 1, according to an example embodiment of the present invention.

Referring to FIG. 1 and FIG. 2, the rechargeable battery pack 100 includes a case 10, a bare cell 20 inserted into the case 10, and a protective circuit module 30 coupled to (e.g., combined with) the bare cell 20.

The case 10 includes a case body 11, a fixed protrusion 12 protruding from a bottom of the case body 11, and a heat radiation groove 13 formed at a bottom of the case body 11.

The fixed protrusion 12 of the case 10 is coupled to (e.g., inserted into) a through-hole 34 formed in the protective circuit module 30 to fix the position of the protective circuit module 30.

Also, the heat radiation groove 13 formed at the bottom of the case body 11 exposes one side of the bare cell 20 to outside of the case 10 when the bare cell 20 is inserted into and fixed to the case 10.

The bare cell 20 may be a rechargeable battery (e.g., a pouch type rechargeable battery), and it includes a bare cell body 21 and a terrace 22 formed at one end of the bare cell body 21.

Further, the terrace 22 includes a first surface 221 formed at one end of the bare cell body 21 and a second surface 222 protruding from the first surface 221. In this embodiment, the bare cell 20 comprises two major surfaces connected by side walls, and the first surface 221 comprises one said side wall, and the second surface 222 extends from one of the major surfaces of the bare cell.

In this embodiment, the bare cell 20 is generally rectangular, and the side wall of the first surface is a short side wall. However, it will be appreciated that in other embodiments of the invention, the bare cell could have other shapes.

Also, the electrode tab is electrically coupled to an electrode assembly of the bare cell 20, is protruded from the first surface 221 of the terrace 22, and is extended along the second surface 222, and it includes a first electrode tab 23 coupled to (e.g., connected to) a first electrode of the electrode assembly and a second electrode tab 24 coupled to a second electrode of the electrode assembly.

The protective circuit module 30 includes a protective circuit board 31 and a connection tab including a first connection tab 32 and a second connection tab 33 coupled to the protective circuit board 31.

FIG. 3 shows a side view of a state in which a protective circuit module of a rechargeable battery pack shown in FIG. 1 is coupled to a bare cell, according to an example embodiment of the present invention.

Referring to FIG. 3, the second connection tab 33 of the protective circuit module 30 includes a connector 33a coupled to the protective circuit board 31, a combination unit 33b (combination portion) bent from the connector 33a, and a bent unit 33c (bent portion) for coupling (e.g., connecting) the connector 33a and the combination unit 33b.

Here, the first connection tab 32 has substantially the same configuration as the second connection tab 33, so a detailed description of the first connection tab 32 will not be provided.

The connector 33a is coupled to (e.g., combined with) a second lateral side 31b facing the second surface 222 of the terrace 22 and, therefore, also is coupled to an opposite side of a first lateral side 31a of the protective circuit board 31.

Here, a protection element is mounted at the second lateral side 31b of the protective circuit board 31.

Also, the connector 33a is coupled to an edge of an outer part of the second lateral side 31b of the protective circuit board 31.

Therefore, because the second connection tab 33 is coupled to the edge of the outer part of the protective circuit board 31 of the protective circuit module 30, sufficient area is reserved (or acquired) for mounting the protection element to the second lateral side 31b of the protective circuit board 31.

Further, the combination unit 33b may be bent away from the connector 33a.

In this instance, the bent unit 33c for connecting the connector 33a and the combination unit 33b is formed between the connector 33a and the combination unit 33b.

Here, the bent unit 33c is bent toward the first surface 221 of the terrace 22. Hence, the bend in the connection tab provided by the bent unit 33c is arranged to face the first surface 221.

As a result, in the embodiment of FIG. 3, the connector 33a is arranged to bend and be stacked on the combination unit 33b so that the bent unit 33c faces the first surface, and the combination unit 33d is arranged to be stacked on the first electrode tab 23 and to be coupled to the electrode tab 23.

Hereinafter, a process for coupling (e.g., joining or combining) the second connection tab 33 to the second electrode tab 24 will be described in detail.

The connector 33a is bent and stacked on the combination unit 33b so that the bent unit 33c may face the first surface 221 of the terrace 22 of the bare cell 20.

In addition, the combination unit 33b is stacked on and coupled to the second electrode tab 24 installed on the second surface 222 of the terrace 22 of the bare cell 20.

As a result, below the second lateral side 31b of the protective circuit board 31, the connector 33a and the combination unit 33b of the second connection tab 33 are sequentially stacked on the second electrode tab 24, and the bent unit 33c for connecting the connector 33a and the combination unit 33b is coupled to the second electrode tab 24 to face the first surface 221 of the terrace 22.

Therefore, the second connection tab 33 is bent and is coupled to the second electrode tab 24, such that the protective circuit module 30 is coupled to the bare cell 10 through a simple installation process.

Also, because the second connection tab 33 is bent toward the first surface 221 of the terrace 22, the second connection tab 33 is installed without digressing from (e.g., extending outside of) the second electrode tab 24.

Hence, when the protective circuit module 30 is coupled to (e.g., connected to) the bare cell 20 by a connection tab, an increase of the entire volume of the rechargeable battery pack 100 may be prevented or reduced.

FIG. 4 shows an exploded perspective view of a rechargeable battery pack, according to a second example embodiment of the present invention, and FIG. 5 shows a side view of a state in which a protective circuit module of a rechargeable battery pack shown in FIG. 4 is coupled to a bare cell, according to an embodiment of the present invention.

Referring to FIG. 4 and FIG. 5, the rechargeable battery pack 200 according to the second example embodiment of the present invention has the same configuration as the rechargeable battery pack 100 according to the first example embodiment of the present invention, except for a protective circuit module 230.

Therefore, a detailed description of the same configuration as the rechargeable battery pack 100 according to the first example embodiment of the present invention will not be provided.

The protective circuit module 230, according to the present example embodiment, includes a protective circuit board 231, and a connection tab including a first connection tab 232 and a second connection tab 233 coupled to the protective circuit board 31.

Referring to FIG. 5, the second connection tab 233, according to the present example embodiment, includes a connector 233a coupled to (e.g., combined with) the protective circuit board 231.

Also, the second connection tab 233 includes a combination unit (combination portion) including a first combination unit 233b (first combination portion) bent at the connector 233a, a second combination unit 233c (second combination portion) bent at the first combination unit 233b, and a third combination unit 233d (third combination portion) bent at the second combination unit 233c.

Here, the first connection tab 232 according to the present example embodiment has the same configuration as the second connection tab 233, so a detailed description on the first connection tab 232 will not be provided.

The connector 233a is coupled to the second lateral side 231b facing the second surface 222 of the terrace 22 and, therefore, is also coupled to an opposite side of the first lateral side 231a of the protective circuit board 231.

Here, a protection element is mounted on the second lateral side 231b of the protective circuit board 231.

In this instance, the connector 233a is coupled to an edge part of an outer part of the second lateral side 231b of the protective circuit board 231.

Hence, according to the present example embodiment, because the second connection tab 233 is coupled to the edge part of the outer part of the protective circuit board 231 of the protective circuit module 230, sufficient area is reserved (or acquired) for mounting the protection element to the second lateral side 231b of the protective circuit board 231.

The bent unit includes a first bent unit 233e (first bent portion) for connecting the connector 233a and the first combination unit 233b, a second bent unit 233f (second bent portion) for connecting the first combination unit 233b and the second combination unit 233c, and a third bent unit 233g (third bent portion) for connecting the second combination unit 233c and the third combination unit 233d.

As a result, the combination unit comprises a first combination unit 233b arranged to bend from the connector 233a, a second combination unit 233c arranged to bend from the first combination unit 233b, and a third combination unit 233d arranged to bend from the second combination unit 233c.

The bent portion comprises: a first bent unit 233e for coupling the connector 233a and the first combination unit 233b; a second bent unit 233f for coupling the first combination unit 233b and the second combination unit 233c; and a third bent unit 233g for coupling the second combination unit 233c and the third combination unit 233c.

The connector 233a is arranged to bend and to be stacked on the first combination unit 233f so that the first bent unit 233e faces the first surface 221, the first combination unit 233b is arranged to be bend and to be stacked on the second combination unit 233c so that the second bent unit 233f faces away from the first surface 221, the second combination unit 233c is arranged to bend and to be stacked on the third combination unit 233d so that the third bent unit 233g faces the first surface 221, and the third combination unit 233d is arranged to be stacked on the electrode tab and is coupled to the electrode tab.

Hereinafter, a process for coupling the second connection tab 233 to the second electrode tab 24, according to the present example embodiment, will be described.

As shown in FIG. 5, the connector 233a, according to the present example embodiment, is stacked on the first combination unit 233b when the first bent unit 233e is bent toward the first surface 221 of the terrace 22.

Further, the first combination unit 233b is stacked on the second combination unit 233c when the second bent unit 233f is bent to face away from (e.g., bent in an opposite direction to that of) the first surface 221.

In addition, the second combination unit 233c is stacked on the third combination unit 233d when the third bent unit 233g is bent toward the surface 221.

Also, the third combination unit 233d is stacked on top of the second electrode tab 24, which is installed on the second surface 222 of the terrace 22, when the third bent unit 233g is bent toward the surface 221.

As a result, regarding the second connection tab 233, according to the present example embodiment, below the second lateral side 231b of the protective circuit board 231, the connector 233a and the first to third combination units 233b, 233c, and 233d of the second connection tab 233 are sequentially stacked on the second electrode tab 24. Thus, the first bent unit 233e for connecting the connector 233a and the first combination unit 233b and the third bent unit 233g for connecting the second combination unit 233c and the third combination unit 233d are coupled to (e.g., combined with) the second electrode tab 24 so that they may face the first surface 221 of the terrace 22.

Accordingly, because the second connection tab 233 is bent and is coupled to (e.g., connected to) the second electrode tab 24, the protective circuit module 230 is coupled to (e.g., combined with) the bare cell 10 through a simple installation process.

Further, because the first bent unit 233e and the third bent unit 233g of the second connection tab 233 are bent toward the first surface 221 of the terrace 22, the second connection tab 233 is installed without digressing from (e.g., extending outside of) the second electrode tab 24.
Therefore, when the protective circuit module 230 is coupled to the bare cell 20 through the connection tab, an increase of the entire volume of the rechargeable battery pack 100 may be prevented or reduced.

FIG. 6 shows a perspective view of a rechargeable battery pack, according to a third example embodiment of the present invention; FIG. 7 shows an exploded perspective view of a rechargeable battery pack shown in FIG. 6, according to an embodiment of the present invention; and FIG. 8 shows a cross-sectional view with respect to a line VIII-VIII shown in FIG. 6, according to an embodiment of the present invention.

Referring to FIG. 6 and FIG. 7, the rechargeable battery pack 300 includes a case 310, a first bare cell 320 and a second bare cell 330 inserted into the case 310, and a protective circuit module 340 coupled to the first bare cell 320 and the second bare cell 330.

The case 310 includes a case body 311, a partition bar 312, a fixed protrusion 3i3 protruding from the partition bar 312, and a first heat radiation groove 314 and a second heat radiation groove 315 formed at a bottom of the case 310.

The fixed protrusion 313 formed on the partition bar 312 of the case 310 is coupled to (e.g., inserted into) a through-hole 346 formed in the protective circuit module 340 and fixes the position of the protective circuit module 340.

Further, the first heat radiation groove 314 and the second heat radiation groove 315 are formed at the bottom of the case 310 with the partition bar 312 therebetween.

Therefore, when the first bare cell 320 and the second bare cell 330 are inserted into the case 310, one side of each of the first bare cell 320 and the second bare cell 330 is exposed to the outside of the case 310 through the first heat radiation groove 314 and the second heat radiation groove 315.

The first bare cell 320 may be a rechargeable battery (e.g., a pouch type rechargeable battery), and includes a first bare cell body 321 and a first terrace 322 formed at an end of the first bare cell body 321.

Also, the first terrace 322 includes a first surface 322a formed at the end of the first bare cell body 321 and a second surface 322b protruding from the first surface 322a. Further, the electrode tab is electrically coupled to an electrode assembly of the first bare cell 320, and is protruded from the first surface 322a of the terrace 222 and extended along the second surface 322b.

Here, the electrode tab includes a first electrode tab 323 coupled to (e.g., connected to) a first electrode and a second electrode tab 324 coupled to the second electrode.

The second bare cell 330 may be a rechargeable battery (e.g., a pouch type rechargeable battery), and includes a second bare cell body 331 and a second terrace 332 formed at the end of the second bare cell body 331.

In addition, the second terrace 332 includes a third surface 332a formed at an end of the second bare cell body 331 and a fourth surface 332b protruding from the third surface 332a.

Also, the electrode tab is electrically coupled to an electrode assembly of the second bare cell 330, and is protruded from the third surface 332a of the second terrace 332 and extended along the fourth surface 332b.

In this instance, the electrode tab includes a third electrode tab 333 coupled to a first electrode of the electrode assembly and a fourth electrode tab 334 coupled to a second electrode of the electrode assembly.

Further, the protective circuit module 340 includes a protective circuit board 341, a first connection tab 342, a second connection tab 343, a third connection tab 344, a fourth connection tab 345, and the through-hole 346 coupled to the fixed protrusion 313.
The first to fourth connection tabs 342, 343, 344, and 345, according to the present example embodiment of the present invention, are formed to have the same configuration as the first and second connection tabs 232 and 233 of the rechargeable battery pack 200 according to the second example embodiment of the present invention.

Therefore, a detailed description of the same parts as in the first and second connection tabs 232 and 233 of the rechargeable battery pack 200, according to the second example embodiment of the present invention, will not be provided.

Referring to FIG. 8, the first connection tab 342 includes a connector 342a coupled to (e.g., combined with) an edge of the protective circuit board 341, and a combination unit including a first combination unit 342b bent from the connector 342a, a second combination unit 342c bent from the first combination unit 342b, and a third combination unit 342d bent from the second combination unit 342c.

Regarding the first connection tab 342, below the protective circuit board 341, the connector 342a of the first connection tab 342 and the first to third combination units 342b, 342c, and 342d are sequentially stacked on the first electrode tab 323 and are coupled to the first electrode tab 323.

Here, because the second to fourth connection tabs 343, 344, and 345 have the same configuration as the first connection tab 342, a detailed description of the second to fourth connection tabs 343, 344, and 345 will not be provided.

Therefore, because the first to fourth connection tabs 342, 343, 344, and 345 are bent and coupled to the first to fourth electrode tabs 323, 324, 333, and 334 (not necessarily in that order), the protective circuit module 340 is coupled to the first bare cell 320 and the second bare cell 330 through a simple installation process.

The coupling of the first to fourth connection tabs 342, 343, 344, and 345 to the first to fourth electrode tabs 323, 324, 333, and 334 according to the present example embodiment corresponds to the coupling of the first and second connection tabs 232 and 233 of the rechargeable battery pack 200 to the first and second electrode tabs 23 and 24 according to the second example embodiment of the present invention. Resultantly, because the connection tab is installed without digressing from (e.g., extending beyond) the second surface 322b and the fourth surface 332b, the increase of the entire volume of the rechargeable battery pack 300 may be prevented or reduced when the protective circuit module 340 is coupled to the first and second bare cells 320 and 330.

Here, the rechargeable battery pack 300, according to the present example embodiment, is not restricted to include the first and second bare cells 320 and 330, and it may include at least three bare cells so that the protective circuit module is coupled to the at least three bare cells.

As discussed above, a rechargeable battery pack according to embodiments of the invention comprises: a bare cell having a first surface and a second surface protruding from the first surface; an electrode tab electrically coupled to the bare cell, the electrode tab protruding from the first surface of the terrace, and extending along the second surface; and a protective circuit module coupled to the electrode tab via a connection tab, wherein the connection tab is arranged to bend towards the first surface.

In some embodiments, the bare cell comprises two major surfaces connected by side walls, and the first surface comprises a side wall of the bare cell, and the second surface extends from a major surface of the bare cell.

In some embodiments, the bare cell comprises a terrace having the first surface and the second surface. In some embodiments, the bare cell comprises other structures that include the first and second surfaces.

While this invention has been described in connection with what is presently considered to be practical example embodiments, it is to be understood that the invention is not limited to the disclosed embodiments, but, on the contrary, is intended to cover various suitable modifications and equivalent arrangements included within the scope of the appended claims and equivalents thereof.

## Claims

1. A rechargeable battery pack comprising:
a bare cell having a first surface and a second surface protruding from the first surface;
an electrode tab electrically coupled to the bare cell, the electrode tab protruding from the first surface, and extending along the second surface; and
a protective circuit module coupled to the electrode tab via a connection tab,
wherein the connection tab is arranged to bend towards the first surface.

2. The rechargeable battery pack of claim 1, wherein the bare cell comprises a terrace having the first surface and the second surface.

3. The rechargeable battery pack of claim 1 or 2, wherein the bare cell comprises two major surfaces connected by side walls, wherein the first surface comprises a said side wall of the bare cell, and the second surface extends from a said major surface of the bare cell.

4. The rechargeable battery pack of any one of claims 1 to 3, wherein a bend in the connection tab is arranged to face the first surface.

5. The rechargeable battery pack of any one of claims 1 to 4, wherein
the connection tab comprises
a connector coupled to an edge of the protective circuit board, a combination portion coupled to the electrode tab, and a bent portion for coupling the connector and the combination portion.

6. The rechargeable battery pack of claim 5, wherein
the connector is arranged to bend and be stacked on the combination portion so that the bent portion faces the first surface, and the combination portion is arranged to be stacked on the electrode tab and to be coupled to the electrode tab.

7. The rechargeable battery pack of claim 5, wherein
the combination portion comprises a first combination portion arranged to bend from the connector, a second combination portion arranged to bend from the first combination portion, and a third combination portion arranged to bend from the second combination portion.

8. The rechargeable battery pack of claim 7, wherein
the bent portion comprises:
a first bent portion for coupling the connector and the first combination portion;
a second bent portion for coupling the first combination portion and the second combination portion; and
a third bent portion for coupling the second combination portion and the third combination portion.

9. The rechargeable battery pack of claim 8, wherein
the connector is arranged to bend and to be stacked on the first combination portion so that the first bent portion faces the first surface,
the first combination portion is arranged to be bend and to be stacked on the second combination portion so that the second bent portion faces away from the first surface,
the second combination portion is arranged to bend and to be stacked on the third combination portion so that the third bent portion faces the first surface, and
the third combination portion is stacked on the electrode tab and is coupled to the electrode tab.

10. The rechargeable battery pack of any one of claims 1 to 9, further comprising a case configured to receive the bare cell.

11. The rechargeable battery pack of claim 10, wherein
the case comprises a fixed protrusion to which the protective circuit module is coupled.

12. The rechargeable battery pack of claim 11, wherein
the case further comprises a heat radiation groove formed at a bottom side of the case.

13. The rechargeable battery pack of any one of claims 1 to 12, wherein
the rechargeable battery pack comprises a plurality of bare cells, and
the connection tab comprises a plurality of connection tabs coupled to electrode tabs of the plurality of bare cells.

14. The rechargeable battery pack of claim 13, wherein the rechargeable battery pack comprises a first bare cell and a second bare cell, wherein the second surface of the first bare cell protrudes from the first surface of the first bare cell in a first direction and the second surface of the second bare cell protrudes from the first surface of the second bare cell in a second direction opposite to the first direction;
wherein the protective circuit module is disposed between the first and second bare cells.
